# FASCICULE DE BREVET EUROPEEN

(11) **EP 3 645 872 B1**
(45) Date de publication et mention de la délivrance du brevet: **04.08.2021**
(21) Numéro de dépôt: 17739700.7
(22) Date de dépôt: 30.06.2017
(51) Int. Cl.: F03D 13/20, E04H 12/08

(54) **TRONÇON DE MÂT D'ÉOLIENNE, MÂT D'ÉOLIENNE ET PROCÉDÉ D'ASSEMBLAGE**
WINDTURBINENTURMABSCHNITT, WINDTURBINENTURM UND MONTAGEVERFAHREN
WIND TURBINE MAST SECTION, WIND TURBINE MAST AND ASSEMBLY METHOD

(43) Date de publication de la demande: 06.05.2020
(73) Titulaire: Arcelormittal, 1160 Luxembourg (LU)
(72) Inventeur: VENTURA GARCIA, Beatriz, 4000 Liège (BE); DI SILVESTRO, Elena, 4140 Sprimont (BE); DUPONT, Emilie, Mont-Saint-Hilaire, QC J3H 6C1 (CA)
(74) Mandataire: Lavoix
(86) Numéro de dépôt international: PCT/IB2017/053968
(87) Numéro de publication internationale: WO 2019/002921

(56) Documents cités:
- WO-A1-2016/156925
- CN-U- 205 669 338
- KR-A- 20150 114 073
- US-A1- 2009 021 019
- US-A1- 2010 313 497

## Description

La présente invention concerne un tronçon de mât pour éolienne, un mât d'éolienne comprenant un tel tronçon, ainsi qu'un procédé d'assemblage d'un tronçon de mât pour éolienne.

Les efforts d'amélioration du rendement énergétique des éoliennes ont conduit au cours du temps à une augmentation de la taille des turbines, nécessitant, pour leur support, des mâts de hauteur et de diamètre accrus. Du fait de leurs dimensions importantes, de tels mâts ne peuvent pas être transportés assemblés. Par conséquent, les mâts sont généralement transportés par portions jusqu'à leur site d'implantation, avant de procéder à leur assemblage in situ.

Plus particulièrement, il existe des procédés d'assemblage de mâts d'éolienne, selon lesquels on transporte des segments de paroi de l'éolienne jusqu'au site d'implantation de l'éolienne, puis on assemble ces segments de paroi au moyen de connecteurs de segment pour former des éléments de mât sensiblement tubulaires, généralement cylindriques ou tronconiques, lesquels sont ensuite successivement assemblés entre eux au moyen de connecteurs d'élément pour former le mât d'éolienne.

Compte tenu des dimensions de plus en plus importantes des mâts d'éoliennes, il est nécessaire d'améliorer la résistance mécanique de ces mâts de sorte à minimiser le risque de défaillance en cours d'utilisation, notamment par flambage, tout en limitant autant que possible les coûts de fabrication et le temps d'assemblage.

KR 20150114073 A, CN 205669338 U et WO 2016/156925 décrivent des mâts d'éolienne modulaires.

Un but de l'invention est de fournir un mât d'éolienne, éventuellement de grande hauteur, présentant une durée de vie accrue et pouvant être transporté facilement et rapidement et assemblé à moindre coût.

A cet effet, l'invention concerne un tronçon de mât pour éolienne selon la revendication 1.

Selon des modes de réalisation particuliers, le tronçon de mât présente l'une ou plusieurs des caractéristiques des revendications 2 à 18, prises isolément ou selon toute combinaison techniquement possible.

L'invention concerne également un mât d'éolienne comprenant un tronçon de mât tel que décrit précédemment.

L'invention concerne également un procédé d'assemblage d'un tronçon de mât selon la revendication 20.

Des caractéristiques particulières du procédé d'assemblage sont définies dans la revendication 21.

L'invention sera mieux comprise à la lecture de la description qui va suivre, donnée uniquement à titre d'exemple, et faite en référence aux dessins annexés, sur lesquels :
- la figure 1 est une vue schématique en perspective d'une éolienne ;
- la figure 2 est une vue schématique en perspective d'une partie d'un tronçon de mât d'éolienne ;
- la figure 3 est une vue schématique en perspective éclatée d'une partie du tronçon de mât de la figure 2 ;
- la figure 4 est une vue schématique agrandie d'une zone de jonction entre deux segments de paroi d'un tronçon de mât selon l'invention, depuis l'intérieur du mât,
- la figure 5 est une vue schématique agrandie d'une zone de jonction entre deux éléments de mât d'un tronçon de mât selon l'invention, depuis l'intérieur du mât ; et
- les figures 6 à 10 illustrent des zones de jonction entre éléments de mât, depuis l'intérieur du mât, selon des exemples comparatifs.

Dans toute la description, on entend par « connexion » la fixation mécanique par un organe de connexion, et en particulier la fixation par boulonnage ou par vissage. Ce terme ne recouvre donc notamment pas la fixation par soudage ou par brasage.

L'emploi de boulons ou de vis pour réaliser les connexions permet de gérer au mieux le comportement en fatigue du tronçon de mât en choisissant les emplacements et la densité des boulons ou des vis en fonction des impératifs de résistance et d'endurance à la fatigue. Par ailleurs, l'absence de soudures au sein du tronçon de mât et du mât d'éolienne permet d'éviter la présence de zones affectées thermiquement, ce qui garantit une homogénéité des performances des aciers et supprime les points faibles engendrés par ces zones affectées thermiquement.

On entend par « hauteur », la dimension d'un élément suivant la direction longitudinale et par « largeur », la dimension de cet élément perpendiculairement à la direction longitudinale.

Dans toute la description, on entend par « bords longitudinaux » d'un élément, les bords de cet élément s'étendant selon la direction longitudinale. On entend par « bords transversaux », les bords de cet élément s'étendant perpendiculairement à la direction longitudinale.

Les termes « haut » et « bas », « en-dessous » et « au-dessus » et « inférieur » et « supérieur » sont utilisés par rapport à l'orientation normale du mât d'éolienne 2 sur son site d'implantation.

Dans toute la description, on entend par « décalage angulaire » la rotation d'un élément constitutif du mât selon l'axe longitudinal central L comparativement à un élément adjacent.

Dans toute la description, les éléments constitutifs du mât, du tronçon de mât et des éléments de mât sont de préférence réalisés en métal, en particulier en acier, et tout particulièrement à partir de bobines ou de plaques d'acier.

Le tronçon de mât 1 pour éolienne suivant l'invention est destiné à former une partie d'un mât 2 d'une éolienne 3.

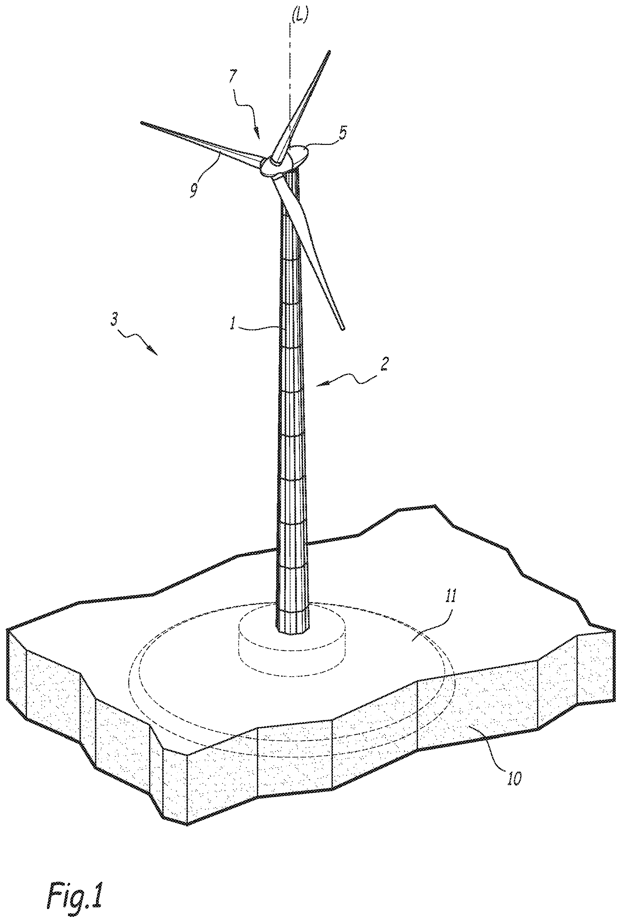

De manière classique, et comme illustré sur la figure 1, l'éolienne 3 comprend, à son extrémité supérieure, une nacelle 5 et un rotor 7 monté sur la nacelle 5. La nacelle 5, montée à l'extrémité supérieure du mât 2, abrite des composants mécaniques, électriques et électroniques pour le fonctionnement de l'éolienne 3. Le rotor 7 comprend une pluralité de pales 9 destinées à être entraînées en rotation autour d'un axe du rotor 5 par l'énergie du vent. A son extrémité inférieure, le mât d'éolienne 2 est destiné à être ancré dans le sol 10 du site d'implantation, partout moyen connu de l'homme du métier, notamment par des fondations 11 adaptées.

Le tronçon de mât 1 selon l'invention présente une forme tubulaire d'axe longitudinal central L s'étendant suivant une direction longitudinale. Lorsque le tronçon de mât 1 est installé sur son site d'implantation, la direction longitudinale s'étend suivant la verticale du site d'implantation.

Dans les exemples illustrés sur les figures, le tronçon de mât 1 présente une forme tronconique, se rétrécissant vers le haut du mât 2.

On entend par « cône » toute surface réglée définie par une génératrice passant par un sommet et un point variable décrivant une courbe directrice.

A titre d'exemple, le tronçon de mât 1 présente un diamètre extérieur de l'ordre de 7 à 11 mètres, et par exemple égal à 9 mètres, à son extrémité inférieure, et de l'ordre de 2 à 4 mètres, et par exemple égal à 4 mètres, à son extrémité supérieure. Ces diamètres peuvent cependant être adaptés en fonction d'impératifs de résistance, de connexion à la nacelle ou liés au site d'installation.

Le tronçon de mât 1 présente de préférence une section transversale polygonale. Chaque côté de ce polygone définit une facette de la paroi du tronçon de mât 1.

Une forme tronconique polygonale présente l'avantage de se rapprocher au mieux de la forme tronconique à base circulaire, qui est la forme présentant la meilleure résistance au vent quelle que soit l'orientation de celui-ci et la meilleure inertie, tout en étant très simple à fabriquer, puisqu'elle peut notamment être réalisée à partir de segments de paroi obtenus par simple pliage ou profilage de tôles métalliques.

Selon une variante, le tronçon de mât 1 présente une forme cylindrique à base polygonale de section transversale constante.

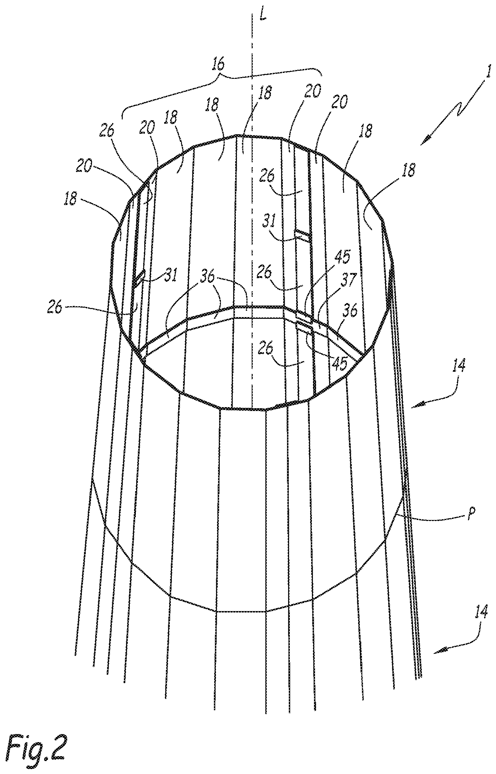

Comme cela est illustré sur la figure 2, le tronçon de mât 1 comprend au moins deux éléments de mât 14, empilés selon la direction longitudinale. Les éléments de mât 14 adjacents du tronçon de mât 1 sont agencés bord à bord, le long d'un plan de jonction P, moyennant les jeux nécessaires à l'assemblage.

Chaque élément de mât 14 présente une forme tubulaire, d'axe longitudinal central confondu avec l'axe longitudinal central L du tronçon de mât 1. Il présente une forme générale analogue à celle du tronçon de mât 1.

Dans les exemples représentés, l'élément de mât 14 présente une forme tronconique, de préférence à base polygonale, se rétrécissant vers le haut de l'élément de mât 14.

Lorsque le tronçon de mât 1 présente une forme cylindrique à base polygonale, l'élément de mât 14 présente également une forme cylindrique à base polygonale.

Chaque élément de mât 14 comprend une pluralité de segments de paroi 16 connectés entre eux par leurs bords longitudinaux. Les segments de paroi 16 adjacents d'un élément de mât 14 sont agencés bord à bord, le long d'une ligne de jonction, moyennant les jeux nécessaires à l'assemblage.

Le fait que les éléments de mât 14 soient formés d'une pluralité de segments de paroi 16 connectés entre eux évite d'être limité par le transport en ce qui concerne le diamètre final de l'élément de mât 14. En effet, les segments de paroi 16 sont relativement peu encombrants et peuvent donc être transportés par des camions standards. Ils peuvent ensuite être assemblés directement sur le site d'implantation pour obtenir des éléments de mât 14 présentant le diamètre souhaité.

Par ailleurs, la conception basée sur l'assemblage de petits éléments permet d'effectuer le transport par des véhicules compacts et légers, ce qui permet de considérer de nouveaux sites d'implantation jusqu'alors inenvisageables car difficilement carrossables pour des transports lourds tels que les transports dits exceptionnels.

A titre d'exemple, l'épaisseur des segments de paroi 16 varie en fonction de leur position le long du mât 2, en diminuant de la base vers le sommet du mât 2. Les segments de paroi 16 présentent par exemple une épaisseur égale à 30 mm à la base du mât 2 et à 16 mm au somment du mât 2.

Dans l'exemple représenté à la figure 2, chaque segment de paroi 16 comprend au moins un pan central 18 et deux pans latéraux 20. Les pans latéraux 20 s'étendent de part et d'autre du pan central 18 selon la circonférence de l'élément de mât 14. Ils encadrent latéralement le pan central 18. Les pans latéraux 20 comprennent les bords longitudinaux du segment de paroi 16. Ils forment chacun un angle avec le ou chaque pan central 18.

Ce type de segment de paroi 16 présente l'avantage d'être facilement obtenu par simple pliage d'une feuille métallique. Les pans latéraux 20 rigidifient les segments de paroi 16 et augmentent la résistance desdits segments 16 à la flexion suivant la direction longitudinale.

Dans l'exemple représenté, pour l'élément de mât 14 représenté, chaque segment de paroi 16 comprend plusieurs pans centraux 18, adjacents selon la circonférence de l'élément de mât 14. Cet ensemble de pans centraux 18 adjacents est encadré par les deux pans latéraux 20. Plus particulièrement, dans cet exemple, pour l'élément de mât 14 représenté, chaque segment de paroi 16 comprend trois pans centraux 18 et deux pans latéraux 20.

Selon un mode de réalisation, les segments de paroi 16 d'un élément de mât 14 donné présentent un nombre de pans centraux 18 dépendant de la position de l'élément de mât selon la direction longitudinale. A titre d'exemple, le nombre de pans centraux 18 par segment de paroi 16 augmente de bas en haut le long du tronçon de mât 1.

La réunion des pans latéraux 20 adjacents de deux segments de paroi 16 adjacents d'un élément de mât 14 forme une facette de l'élément de mât 14. Chaque pan central 18 d'un segment de paroi 16 forme également une facette de l'élément de mât 14.

Chaque facette du tronçon de mât 1 associé correspond alors à la réunion des facettes adjacentes longitudinalement des éléments de mât 14 empilés.

Les segments de paroi 16 sont assemblés entre eux par des connecteurs de segment 26 s'étendant le long des bords longitudinaux des segments de paroi 16. Les connecteurs de segment 26 sont rapportés sur les segments de paroi 16. Chaque connecteur de segment 26 s'étend à cheval sur deux segments de paroi 16 adjacents d'un élément de mât 14. Il est fixé sur les pans latéraux 20 adjacents des deux segments de paroi 16 adjacents de l'élément de mât 14.

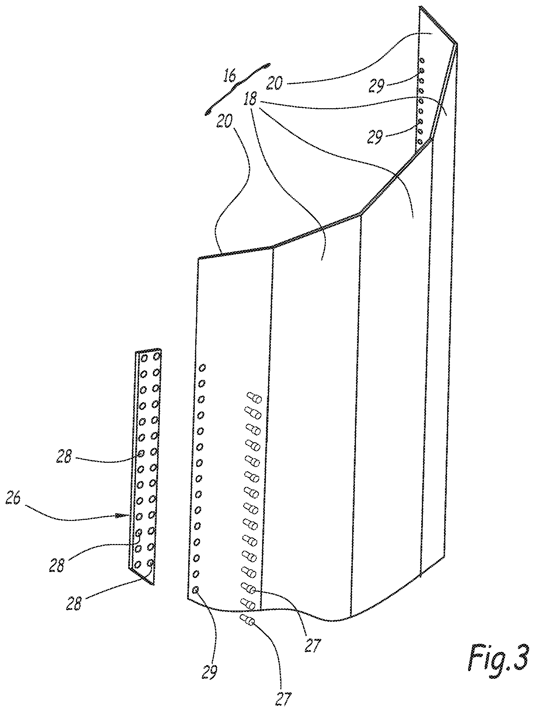

Comme cela est illustré schématiquement sur la figure 3, chaque connecteur de segment 26 est fixé sur les segments de paroi 16 correspondants par l'intermédiaire de premiers organes de connexion 27, notamment des vis ou des boulons. A cet effet, les connecteurs de segment 26 comprennent des orifices de connexion 28 destinés à recevoir les premiers organes de connexion 27. Ces orifices de connexion 28 sont organisés sous la forme d'un réseau comprenant des lignes, s'étendant perpendiculairement à la direction longitudinale et des rangées, s'étendant parallèlement à la direction longitudinale.

Les segments de paroi 16 comprennent également des orifices de connexion 29 organisés selon un réseau coïncidant avec celui des orifices de connexion 28 des connecteurs de segment 26.

Pour des raisons de simplification des dessins, les premiers organes de connexion 27 et les orifices de connexion 28, 29 ne sont représentés que sur certaines des figures.

Les connecteurs de segment 26 sont plans. Ils sont avantageusement réalisés par simple découpage à partir d'une tôle d'acier.

Les connecteurs de segment 26 sont disposés à l'intérieur du tronçon de mât 1.

De préférence, la largeur des connecteurs de segment 26 est constante sur toute leur hauteur. Chaque connecteur de segment 26 présente, dans les exemples illustrés, une forme rectangulaire allongée suivant la direction longitudinale.

A titre d'exemple, la largeur des connecteurs de segment 26 est inférieure ou égale à 40% de la largeur de la facette de paroi de l'élément de mât 14 formée par la connexion des pans latéraux 20 des deux segments de paroi 16 de l'élément de mât 14 au moyen dudit connecteur de segment 26. Plus particulièrement, elle est inférieure ou égale à 30% de cette largeur. Cette largeur peut être adaptée pour chaque connecteur de segment 26 du tronçon de mât 1 en fonction des efforts que le connecteur de segment 26 devra supporter.

De préférence, pour des raisons économiques et de logistique sur chantier, tous les connecteurs de segment 26 du tronçon de mât 1 présentent la même largeur.

Dans le mode de réalisation représenté sur la figure 2, pour au moins un élément de mât 14, chaque connecteur de segment 26 s'étend sur une partie seulement de la hauteur de l'élément de mât 14. Ainsi, au niveau de chaque jonction entre deux segments de paroi 16 adjacents au sein de l'élément de mât 14, cet élément de mât 14 comprend au moins deux connecteurs de segment 26, à savoir un connecteur de segment 26 inférieur et un connecteur de segment 26 supérieur, adjacents selon la direction longitudinale. Le connecteur de segment 26 supérieur est disposé dans le prolongement, selon la direction longitudinale, du connecteur de segment 26 inférieur. A titre d'exemple, les connecteurs de segment 26 inférieur et supérieur sont disposés bord à bord le long d'une ligne de jonction, moyennant les jeux nécessaires à l'assemblage.

Selon un mode de réalisation, les longueurs des connecteurs de segment 26 inférieur et supérieur sont choisies de telle sorte que la somme de leurs longueurs soit sensiblement égale à la longueur des segments de paroi 16 qu'ils relient, prise selon la direction longitudinale. Dans ce mode de réalisation, chaque jonction entre deux segments de paroi 16 au sein de l'élément de mât 14 considéré comprend exactement deux connecteurs de segment 26.

Selon une variante, chaque jonction entre deux segments de paroi 16 au sein de l'élément de mât 14 considéré comprend plus de deux connecteurs de segment 26. De préférence, chaque couple de connecteurs de segment 26 adjacents longitudinalement est disposé bord à bord le long d'une ligne de jonction, moyennant les jeux nécessaires à l'assemblage.

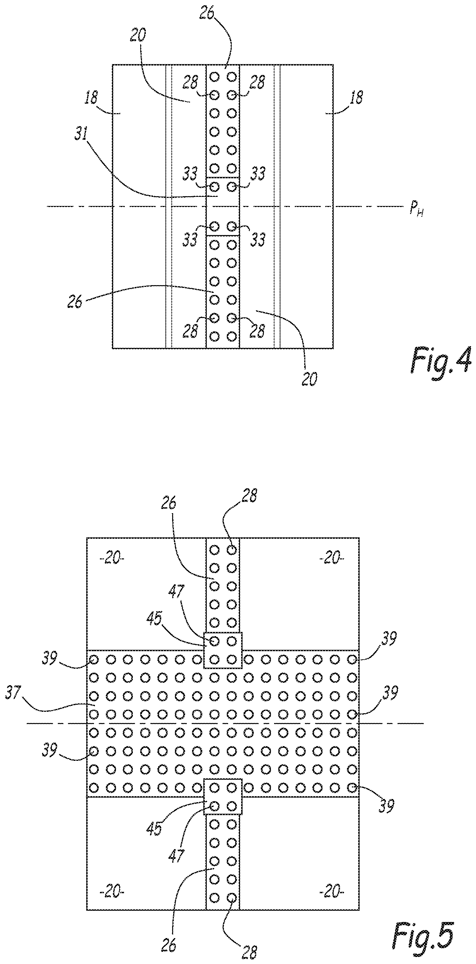

Selon l'invention, et tel qu'illustré plus particulièrement sur les figures 2 et 4, le tronçon de mât 1 peut comprendre en outre des sur-connecteurs de segment 31.

Au sein d'un élément de mât 14 considéré, et comme cela est représenté notamment sur les figures 2 et 4, chaque sur-connecteur de segment 31 est disposé à cheval sur deux connecteurs de segment 26, à savoir un connecteur de segment 26 inférieur et un connecteur de segment 26 supérieur, adjacents selon la direction longitudinale.

Plus particulièrement, chaque sur-connecteur de segment 31 est rapporté sur les connecteurs de segment 26 au niveau des surfaces intérieures des connecteurs de segment 26. Il s'étend en contact surfacique avec les surfaces intérieures des connecteurs de segment 26 sous-jacents. Les surfaces extérieures des connecteurs de segment 26 sont en contact avec les segments de paroi 16 correspondants.

A titre d'exemple, le contour extérieur de chaque sur-connecteur de segment 31 est symétrique par rapport au plan horizontal P_{H} passant à mi-chemin entre le connecteur de segment 26 inférieur et le connecteur de segment 26 supérieur, et plus particulièrement par la ligne de jonction entre le connecteur de segment 26 inférieur et le connecteur de segment 26 supérieur.

En d'autres termes, le sur-connecteur de segment 31 est symétrique par rapport à ce plan horizontal en ce qui concerne sa forme générale. En revanche, en raison de différences possibles de distance entre les lignes et/ou rangées d'orifices de connexion de connecteurs de segment 26 adjacents, les lignes d'orifices de connexion du sur-connecteur de segment 31 peuvent ne pas être symétriques par rapport à ce plan horizontal.

Selon un mode de réalisation, chaque sur-connecteur de segment 31 est symétrique par rapport au plan horizontal P_{H} passant à mi-chemin entre le connecteur de segment 26 inférieur et le connecteur de segment 26 supérieur, et plus particulièrement par la ligne de jonction entre le connecteur de segment 26 inférieur et le connecteur de segment 26 supérieur.

Les sur-connecteurs de segment 31 sont plans. Ils sont avantageusement réalisés par simple découpage à partir d'une tôle d'acier.

Les sur-connecteurs de segment 31 présentent une forme de plaque. Dans l'exemple représenté, ils présentent un contour rectangulaire.

De préférence, la largeur de chaque sur-connecteur de segment 31, prise perpendiculairement à la direction longitudinale, est supérieure ou égale à 70% de la largeur du connecteur de segment 26.

Dans l'exemple représenté, le sur-connecteur de segment 31 présente une largeur sensiblement égale à la largeur des connecteurs de segment 26 inférieur et supérieur qu'il chevauche. Dans cet exemple, les bords longitudinaux du sur-connecteur de segment 31 coïncident sensiblement avec les bords longitudinaux des connecteurs de segment 26 sous-jacents.

De préférence, la longueur de chaque sur-connecteur de segment 31, prise selon la direction longitudinale, est supérieure ou égale à 2% de la hauteur de l'élément de mât 14 correspondant. Elle est en particulier inférieure ou égale à 8% de la hauteur de l'élément de mât 14 correspondant.

Avantageusement, chaque sur-connecteur de segment 31 comprend des lignes d'orifices de connexion 33, prévus pour la fixation du sur-connecteur de segment 31 aux connecteurs de segment 26. Chaque ligne d'orifices de connexion 33 s'étend sensiblement perpendiculairement à la direction longitudinale.

Avantageusement, les orifices de connexion 33 des sur-connecteurs de segment 31 sont disposés de telle sorte qu'ils coïncident avec des orifices de connexion 28 des connecteurs de segment 26 sous-jacents.

Les sur-connecteurs de segment 31 sont fixés sur les connecteurs de segment 26 sous-jacents par l'intermédiaire des organes de connexion 27 décrits précédemment, ces organes de connexion 27 étant insérés à travers les orifices de connexion 28, 33 coïncidents du sur-connecteur de segment 31 et des connecteurs de segment 26.

Le sur-connecteur de segment 31 comprend de préférence un nombre pair de lignes d'orifices de connexion 33 et comprend le même nombre de lignes d'orifices de connexion 33 en regard de chaque connecteur de segment 26, c'est-à-dire de part et d'autre de la ligne de jonction entre les connecteurs de segment 26 inférieur et supérieur.

Dans l'exemple représenté, le sur-connecteur de segment 31 comprend exactement deux lignes d'orifices de connexion 33, les orifices de connexion 33 de la ligne d'orifices de connexion 33 inférieure s'étendant en regard d'orifices de connexion 28 du connecteur de segment 26 inférieur et les orifices de connexion 33 de la ligne d'orifices de connexion 33 supérieure s'étendant en regard d'orifices de connexion 28 du connecteur de segment 26 supérieur.

En variante, le sur-connecteur de segment 31 peut comprendre plus de deux lignes d'orifices de connexion 33.

A titre d'exemple, le sur-connecteur de segment 31 comprend également un nombre pair de rangées d'orifices de connexion, lesdites rangées s'étendant selon la direction longitudinale. Dans l'exemple représenté, le sur-connecteur de segment 31 comprend exactement deux rangées d'orifices de connexion.

De préférence, le tronçon de mât 1 comprend un sur-connecteur 31 au niveau de chaque jonction entre deux connecteurs de segment 26 juxtaposés selon la direction longitudinale.

Dans l'exemple représenté sur les figures, les connecteurs de segment 26 s'étendent chacun sur une partie seulement de la hauteur de l'élément de mât 14 et chaque élément de mât 14 comprend plusieurs connecteurs de segment 26 adjacents selon la direction longitudinale.

Selon une variante (non représentée), chaque connecteur de segment 26 s'étend sur toute la hauteur de l'élément de mât 14 correspondant. Dans ce cas, l'élément de mât 14 correspondant ne comprend pas de sur-connecteurs de segment 31.

Le choix du nombre de connecteurs de segment 26 par élément de mât 14 dépend de la hauteur desdits éléments de mâts 14, le nombre de connecteurs de segment 26 par élément de mât 14 augmentant notamment avec la hauteur de l'élément de mât 14.

Le tronçon de mât 1 comprend en outre des moyens de connexion entre eux de deux éléments de mât 14 adjacents selon la direction longitudinale.

Ces moyens de connexion comprennent des connecteurs d'élément 37, s'étendant chacun à cheval sur deux éléments de mât 14 adjacents selon la direction longitudinale, dans le prolongement longitudinal d'un connecteur de segment 26 respectif.

Les connecteurs d'élément 37 sont disposés à l'intérieur du tronçon de mât 1.

Les figures 2 et 5 illustrent plus particulièrement des connecteurs d'élément 37 selon l'invention.

Les connecteurs d'élément 37 sont plans. Ils sont avantageusement réalisés par simple découpage à partir d'une tôle d'acier.

Dans le mode de réalisation représenté, la largeur des connecteurs d'élément 37, prise perpendiculairement à la direction longitudinale, est constante sur toute la hauteur des connecteurs 37, prise selon la direction longitudinale. Chaque connecteur d'élément 37 présente, dans les exemples illustrés, une forme rectangulaire allongée suivant une direction perpendiculaire à la direction longitudinale.

Dans le cas d'un tronçon de mât 1 présentant des facettes, chaque connecteur d'élément 37 s'étend sur une facette du tronçon de mât 1, à cheval sur les facettes adjacentes longitudinalement des éléments de mât 14 connectés entre eux par ce connecteur d'élément 37.

Les connecteurs d'élément 37 présentent une largeur inférieure ou égale à la largeur de la facette de paroi du tronçon de mât 1 sur laquelle ils sont fixés, prise au niveau du plan de jonction P entre ces deux éléments de mât 14. Avantageusement, les connecteurs d'élément 37 présentent une largeur supérieure ou égale à 70% de la largeur de cette facette de paroi, et plus particulièrement à 85% de cette largeur. Dans le mode de réalisation représenté sur les figures, les connecteurs d'élément 37 présentent une largeur sensiblement égale à la largeur de la facette de paroi du tronçon de mât 1 sur laquelle ils sont fixés.

Dans l'exemple représenté sur la figure 5, les connecteurs d'élément 37 sont symétriques par rapport au plan de jonction P entre les éléments de mât 14 qu'ils chevauchent.

Avantageusement, chaque connecteur d'élément 37 est disposé bord à bord avec un connecteur de segment 26 le long d'une ligne de jonction moyennant les jeux nécessaires à l'assemblage.

Les connecteurs d'élément 37 sont fixés sur les éléments de mât 14 au moyen de deuxièmes organes de connexion (non représentés), formés par exemple par des vis ou des boulons.

A titre d'exemple, chaque connecteur d'élément 37 comprend un réseau régulier d'orifices de connexion 39 destinés à recevoir les deuxièmes organes de connexion, ce réseau comprenant des lignes, s'étendant perpendiculairement à la direction longitudinale et des rangées, s'étendant parallèlement à la direction longitudinale.

Ce réseau est par exemple un réseau à maille rectangulaire, et par exemple à maille carrée. Les orifices de connexion 39 sont répartis régulièrement sur toute la surface des connecteurs d'élément 37.

La distance entre orifices de connexion 39 adjacents est choisie de sorte à optimiser la résistance mécanique et l'endurance à la fatigue en fonction des besoins et des critères géométriques établis par les normes en vigueur.

Les segments de mât 16 comprennent un réseau d'orifices de connexion (non représenté) coïncidant avec le réseau d'orifices de connexion 39 des connecteurs d'élément 37.

Au sein des connecteurs de segment 26 et/ou des connecteurs d'élément 37, les distances entre les lignes d'orifices de connexion 28, 39, formées perpendiculairement à la direction longitudinale et/ou entre les rangées d'orifices de connexion 28, 39, formées parallèlement à la direction longitudinale, sont choisies de manière à optimiser le nombre de boulons nécessaires en fonction des contraintes mécaniques.

A titre d'exemple, la distance entre les lignes d'orifices de connexion 28 des connecteurs de segment 26 est différente de la distance entre les lignes d'orifices de connexion 39 des connecteurs d'élément 37.

Dans le mode de réalisation représenté sur les figures, les distances entre les rangées d'orifices de connexion 28, formées parallèlement à la direction longitudinale, des connecteurs de segment 26 et entre les rangées d'orifices de connexion 39, formées parallèlement à la direction longitudinale, des connecteurs d'élément 37 sont identiques de telle sorte qu'au sein du tronçon de mât 1, les rangées de premiers organes de connexion 27 s'étendent dans le prolongement de rangées de deuxièmes organes de connexion 31.

Pour des raisons de simplification des dessins, les deuxièmes organes de connexion et les orifices de connexion ne sont représentés que sur certaines des figures.

Dans le mode de réalisation de l'invention représenté, le tronçon de mât 1 comprend en outre des sur-connecteurs d'élément 45, disposés à cheval sur un connecteur de segment 26 et sur un connecteur d'élément 37 adjacents longitudinalement.

Plus particulièrement, chaque sur-connecteur d'élément 45 est rapporté sur les connecteurs 26, 37 au niveau des surfaces intérieures de ces connecteurs 26, 37. Il s'étend en contact surfacique avec les surfaces intérieures des connecteurs 26, 37 sous-jacents. Les surfaces extérieures des connecteurs 26, 37 sont en contact avec les segments de paroi 16 correspondants.

Les sur-connecteurs d'élément 45 sont plans. Ils sont avantageusement réalisés par simple découpage à partir d'une tôle d'acier.

Les sur-connecteurs d'élément 45 présentent une forme de plaque. Dans l'exemple représenté, ils présentent un contour rectangulaire.

Chaque sur-connecteur d'élément 45 présente une hauteur, prise selon la direction longitudinale, supérieure ou égale à 2% de la hauteur de l'élément de mât 14 correspondant. Elle est en particulier inférieure ou égale à 8% de la hauteur de l'élément de mât 14 correspondant.

Chaque sur-connecteur d'élément 45 présente une largeur, prise perpendiculairement à la direction longitudinale, supérieure ou égale à 70% de la largeur du connecteur de segment 26 sous-jacent. Dans l'exemple représenté, chaque sur-connecteur d'élément 45 présente une largeur sensiblement égale à la largeur du connecteur de segment 26 qu'il chevauche. Dans cet exemple, les bords longitudinaux de chaque sur-connecteur d'élément 45 coïncident sensiblement avec les bords longitudinaux du connecteur de segment 26 sous-jacent.

Les sur-connecteurs d'élément 45 présentent ainsi une structure et une forme sensiblement identiques à celles des sur-connecteurs de segment 31.

Le contour extérieur de chaque sur-connecteur d'élément 45 est avantageusement symétrique par rapport à un plan horizontal passant à mi-chemin entre le connecteur de segment 26 et le connecteur d'élément 37 sous-jacents, et plus particulièrement passant par la ligne de jonction entre ces deux connecteurs 26, 37.

En d'autres termes, le sur-connecteur d'élément 45 est symétrique par rapport à ce plan horizontal en ce qui concerne sa forme générale. En revanche, compte tenu des différences possibles de distance entre les lignes et/ou rangées d'orifices de connexion de connecteurs de segment 26 et celles des connecteurs d'élément 37, les lignes d'orifices de connexion du sur-connecteur d'élément 45 peuvent ne pas être symétriques par rapport à ce plan horizontal.

Avantageusement, chaque sur-connecteur d'élément 45 comprend des lignes d'orifices de connexion 47, prévus pour la fixation du sur-connecteur d'élément 45 aux connecteurs 26, 37 sous-jacents. Avantageusement, les orifices de connexion 47 des sur-connecteurs d'élément 45 sont disposés de telle sorte qu'ils coïncident avec des orifices de connexion 28, 39 des connecteurs 26, 37 sous-jacents.

Les sur-connecteurs d'élément 45 sont fixés sur les connecteurs 26, 37 sous-jacents par l'intermédiaire des organes de connexion connectant ces connecteurs 26, 37 au segment de paroi 16 correspondant, ces organes de connexion étant insérés à travers les orifices de connexion coïncidents du sur-connecteur d'élément 31 et des connecteurs 26, 37 sous-jacents.

Le sur-connecteur d'élément 45 comprend de préférence un nombre pair de lignes d'orifices de connexion 47 et comprend le même nombre de lignes d'orifices de connexion 47 en regard des connecteurs 26, 37, c'est-à-dire de part et d'autre de la ligne de jonction entre les connecteurs 26, 37.

Chaque ligne d'orifices de connexion 47 s'étend perpendiculairement à la direction longitudinale.

Dans l'exemple représenté, le sur-connecteur d'élément 45 comprend exactement deux lignes d'orifices de connexion 47, les orifices de connexion 47 de la ligne d'orifices de connexion 47 inférieure s'étendant en regard d'orifices de connexion 39 du connecteur d'élément 37 et les orifices de connexion 47 de la ligne d'orifices de connexion 47 supérieure s'étendant en regard d'orifices de connexion 28 du connecteur de segment 26.

Par exemple, le sur-connecteur d'élément 45 comprend en outre un nombre pair de rangées d'orifices de connexion 47, chaque rangée d'orifices de connexion 47 s'étendant selon la direction longitudinale. Plus particulièrement, dans l'exemple représenté, le sur-connecteur d'élément 45 comprend exactement deux rangées d'orifices de connexion 47.

De préférence, le tronçon de mât 1 comprend un sur-connecteur d'élément 45 au niveau de chaque jonction entre un connecteur de segment 26 et un connecteur d'élément 37.

Comme illustré sur la figure 2, les moyens de connexion entre eux des éléments de mât 14 peuvent comprendre en outre des connecteurs intermédiaires 36. Les connecteurs intermédiaires 36 connectent les éléments de mât 14 entre eux au niveau des pans centraux 18 de leurs segments de paroi 16. Ils s'étendent à cheval sur les deux éléments de mât 14 adjacents en étant fixés sur les pans centraux 18 des segments de paroi 16 de ces éléments de mât 14. Ils sont disposés entre deux connecteurs d'élément 37 adjacents circonférentiellement. Ils s'étendent le long des bords transversaux des éléments de mât 14.

Les connecteurs intermédiaires 36 sont disposés à l'intérieur du tronçon de mât 1.

Les connecteurs intermédiaires 36 sont sensiblement plans. Ils présentent, dans l'exemple représenté, un contour rectangulaire. Ils s'étendent selon une direction d'allongement sensiblement perpendiculaire à la direction longitudinale.

Les connecteurs intermédiaires 36 présentent une largeur inférieure ou égale à la largeur de la facette de paroi du tronçon de mât 1 sur laquelle ils sont fixés, prise au niveau du plan de jonction P entre ces éléments de mât 14. Cette facette de paroi est formée par la réunion des pans centraux 20 des deux segments de paroi 16 adjacents longitudinalement. A titre d'exemple, les connecteurs intermédiaires 36 présentent une largeur supérieure ou égale à 50% de la largeur de cette facette de paroi, prise au niveau du plan de jonction P entre ces éléments de mât 14.

Les connecteurs intermédiaires 36 participent à la tenue en rigidité le long du mât 2, et plus particulièrement entre deux éléments de mât 14 adjacents.

Les connecteurs intermédiaires 36 sont fixés sur les segments de paroi 16 par l'intermédiaire de troisièmes organes de connexion, tels que des vis ou des boulons. Chaque connecteur intermédiaire 36 comprend un réseau régulier d'orifices de connexion destinés à recevoir les troisièmes organes de connexion. Ce réseau est par exemple un réseau à maille rectangulaire, et par exemple à maille carrée. Les orifices de connexion sont répartis régulièrement sur toute la surface des connecteurs intermédiaires. La distance entre orifices de connexion adjacents est choisie de sorte à optimiser la résistance mécanique et l'endurance à la fatigue en fonction des besoins.

Lorsque le tronçon de mât 1 comprend des connecteurs intermédiaires 36, les segments de mât 16 comprennent un réseau d'orifices de connexion coïncidant avec le réseau d'orifices de connexion des connecteurs intermédiaires.

Pour des raisons de simplification des dessins, les troisièmes organes de connexion et les orifices de connexion correspondants n'ont pas été représentés sur les figures.

L'invention a également pour objet un procédé d'assemblage d'un tronçon de mât 1 tel que décrit précédemment.

Ce procédé d'assemblage comprend :
- la fourniture de segments de paroi 16 et l'assemblage de ces segments de paroi 16 entre eux par l'intermédiaire des connecteurs de segment 26 de sorte à former des éléments de mât 14 ;
- l'empilement, selon la direction longitudinale, de deux éléments de mât 14 et la connexion entre eux de ces deux éléments de mât 14 au moyen des connecteurs d'élément 37 ; et
- la fixation de sur-connecteurs d'élément 45, chaque sur-connecteur d'élément 45 étant fixé à cheval sur un connecteur de segment 26 et sur un connecteur d'élément 37, adjacents longitudinalement.

En option, dans le cas où un élément de mât 14 donné comprend plusieurs connecteurs de segment 26 adjacents selon la direction longitudinale, le procédé d'assemblage comprend en outre une étape de fixation de sur-connecteurs de segment 31, chaque sur-connecteur de segment 31 étant fixé à cheval sur deux connecteurs de segment 26 adjacents longitudinalement.

En option, lors de l'étape d'empilement, les deux éléments de mât 14 sont en outre connectés au moyen de troisièmes connecteurs 36, ces troisièmes connecteurs étant de préférence disposés à cheval sur deux pans centraux 18 adjacents longitudinalement des segments de paroi 16 des deux éléments de mât 14.

L'invention concerne également un mât d'éolienne 2 comprenant au moins un tronçon de mât 1 tel que décrit précédemment. Avantageusement, le mât d'éolienne 2 est formé par empilement, selon la direction longitudinale, de tels tronçons de mât 1.

Dans le mode de réalisation représenté sur les figures, les bords longitudinaux d'un segment de paroi 16 de l'élément de mât 14 supérieur se situent dans le prolongement des bords longitudinaux du segment de paroi 16 adjacent selon la direction longitudinale de l'élément de mât 14 inférieur. Ainsi, les pans latéraux 20 de l'élément de mât 14 supérieur se trouvent dans le prolongement, selon la direction longitudinale, des pans latéraux 20 de l'élément de mât 14 inférieur et les pans centraux 18 de l'élément de mât 14 supérieur se trouvent dans le prolongement, selon la direction longitudinale, des pans centraux 18 de l'élément de mât 14 inférieur. Dans cet exemple, chaque connecteur d'élément 37 s'étend à cheval sur les pans latéraux 20 de quatre segments de paroi 16 adjacents.

Un tronçon de mât 1 selon une variante du mode de réalisation représenté sur les figures diffère du tronçon de mât représenté sur les figures uniquement en ce que les éléments de mât 14 adjacents longitudinalement sont décalés angulairement l'un par rapport à l'autre de sorte que les bords longitudinaux d'un segment de paroi 16 de l'élément de mât 14 supérieur ne soient pas dans le prolongement des bords longitudinaux du segment de paroi 16 adjacent longitudinalement de l'élément de mât 14 inférieur. Autrement dit, les lignes de jonction entre segments de paroi 16 adjacents circonférentiellement de l'élément de mât 14 supérieur sont décalées angulairement par rapport aux lignes de jonction entre segments de paroi 16 adjacents circonférentiellement de l'élément de mât 14 inférieur. Elles ne s'étendent pas dans le prolongement l'une de l'autre selon la direction longitudinale.

Selon cette variante, au moins un pan central 18 d'un segment de paroi 16 de l'élément de mât 14 supérieur s'étend en regard, selon la direction longitudinale, de deux pans latéraux 20 adjacents de l'élément de mât 14 inférieur.

Ainsi, les connecteurs de segment 26 de l'élément de mât 14 supérieur sont décalés angulairement par rapport aux connecteurs de segment 26 de l'élément de mât 14 inférieur. Ils ne s'étendent pas dans le prolongement l'un de l'autre.

Dans cette variante, compte tenu du décalage angulaire entre les éléments de mât 14 adjacents, chaque connecteur d'élément 37 est en contact, moyennant les jeux nécessaires à l'assemblage, avec un seul connecteur de segment 26. Par ailleurs, il s'étend à cheval sur trois segments de paroi 16, et non quatre comme dans le mode de réalisation précédent.

Un tel décalage angulaire des éléments de mât 14 améliore la résistance mécanique du tronçon de mât 1 et du mât 2 dans la mesure où les lignes de jonction entre segments de paroi 16 des éléments de mât 14 adjacents, matérialisées par les connecteurs de segment 26, ne sont pas disposées en regard selon la direction longitudinale. En effet, les zones plus faibles mécaniquement sont ainsi mieux réparties selon la circonférence du tronçon de mât 1, ce qui améliore encore la résistance mécanique du mât d'éolienne 2.

Les sur-connecteurs de segment 31 et les sur-connecteurs d'élément 45 selon cette variante sont identiques à ceux décrits en regard des figures.

Les inventeurs ont constaté, de manière inattendue, que la mise en oeuvre de sur-connecteurs 31, 45 tels que décrits ci-dessus, s'étendant à cheval sur les jonctions entre connecteurs de segment 26 et connecteurs d'élément 37 ou entre connecteurs de segment 26 adjacents, améliorait de manière significative la répartition des efforts au sein du tronçon de mât 1 et du mât d'éolienne 2. La mise en oeuvre de tels sur-connecteurs 31, 45 améliore ainsi la résistance statique et dynamique du tronçon de mât 1 et du mât d'éolienne 2, permettant une distribution plus homogène des contraintes dans les parties des éléments de mât 14 qui se trouvent aux alentours des zones de connexion.

En particulier, en l'absence de tels sur-connecteurs, les inventeurs ont observé l'apparition de zones de concentration de contraintes aux alentours des connecteurs de segment 26 et des connecteurs d'élément 37. Or, les inventeurs ont constaté que la mise en œuvre des sur-connecteurs 31, 45 tels que décrits ci-dessus permet d'éviter ou de limiter l'apparition de ces zones de concentration de contraintes, sans qu'il soit pour autant nécessaire d'augmenter l'épaisseur des segments de paroi 16.

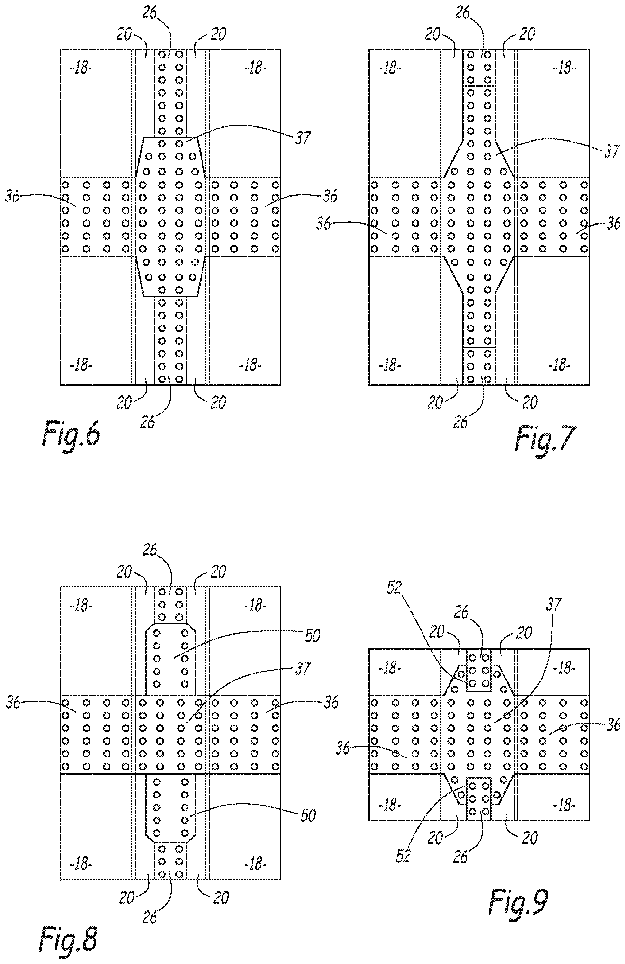

Les inventeurs de la présente invention ont réalisé des simulations numériques, au cours desquelles ils ont comparé la répartition des efforts dans un tronçon de mât d'éolienne muni de sur-connecteurs d'élément 45 tel qu'illustré sur la figure 2 avec les cinq tronçons de mât comparatifs illustrés respectivement sur les figures 6 à 10 et décrits par la suite.

Les tronçons de mât 1 comparatifs ne comprennent pas de sur-connecteurs.

Comme cela est représenté sur les figures 6 à 10, dans tous les tronçons de mât 1 comparatifs, les connecteurs de segment 26 présentent une forme sensiblement rectangulaire.

Chacun des connecteurs d'élément 37 est symétrique par rapport au plan de jonction entre éléments de mâts 14 adjacents.

Plus particulièrement, comme cela est illustré sur la figure 6, dans le premier tronçon de mât 1 comparatif, chaque connecteur d'élément 37 présente un contour octogonal. Dans cet exemple, la largeur des connecteurs d'élément 37 varie, en direction de chacun des connecteurs de segment 26 adjacents, depuis une largeur sensiblement égale à celle de la facette de l'élément de mât 14 sur lequel est fixé le connecteur d'élément 37 jusqu'à une largeur sensiblement égale à celle des connecteurs de segment 26 adjacents.

Dans le deuxième tronçon de mât 1 comparatif, illustré sur la figure 7, chaque connecteur d'élément 37 présente une partie centrale de contour orthogonal, disposée à cheval sur la ligne de jonction entre les deux éléments de mât 14 adjacents et prolongée longitudinalement, à chacune de ses extrémités longitudinales, par une partie d'extrémité de contour rectangulaire. La largeur de la partie centrale varie, en direction de ses extrémités longitudinales, depuis une largeur sensiblement égale à celle de la facette de l'élément de mât 14 sur lequel est fixé le connecteur d'élément 37 jusqu'à une largeur sensiblement égale à celle des connecteurs de segment 26. La partie de contour rectangulaire présente une largeur sensiblement égale à celle des connecteurs de segment 26.

Dans le troisième tronçon de mât 1 comparatif, illustré sur la figure 8, chaque connecteur d'élément 37 présente une forme rectangulaire de largeur sensiblement égale à celle de la facette de l'élément de mât 14 sur lequel est fixé le connecteur d'élément 37. De plus, un connecteur intermédiaire 50 est intercalé entre le connecteur de segment 26 et le connecteur d'élément 37. Le connecteur intermédiaire 50 présente une largeur sensiblement égale à celle du connecteur de segment 26 au niveau de sa jonction avec le connecteur de segment 26. La largeur du connecteur intermédiaire 50 augmente à partir du connecteur de segment 26 en direction du connecteur d'élément 37.

Dans le quatrième tronçon de mât 1 comparatif, illustré sur la figure 9, chaque connecteur d'élément 37 présente un contour octogonal analogue à celui des connecteurs d'élément 37 du premier tronçon de mât 1 comparatif, mais comprend, à chacune de ses extrémités longitudinales, une échancrure 52 présentant une forme complémentaire de celle du connecteur de segment 26, dans laquelle est reçue une extrémité correspondante du connecteur de segment 26.

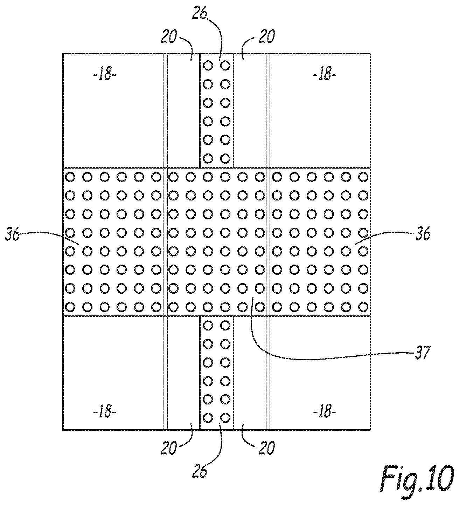

Dans le cinquième tronçon de mât 1 comparatif, illustré sur la figure 10, les connecteurs de segment 26 et d'élément 37 présentent des formes identiques à celles des connecteurs de segment 26 et d'élément 37 selon le mode de réalisation de l'invention illustré sur la figure 2, mais le tronçon de mât 1 ne comprend pas de sur-connecteurs.

Plus particulièrement, les inventeurs ont déterminé, pour chaque type de tronçon de mât 1, des valeurs d'un facteur d'excentricité, défini comme étant le rapport entre la valeur effective de la contrainte de Von Mises aux alentours des connexions boulonnées et la valeur nominale de la contrainte de Von Mises calculée selon la théorie des coques. La valeur effective de la contrainte autour des connexions boulonnées étant égale ou supérieure à la contrainte nominale, le facteur d'excentricité est toujours supérieur ou égal à 1.

Ce facteur d'excentricité est représentatif de l'impact de chaque configuration sur la distribution des contraintes dans le tronçon de mât 1.

Plus particulièrement, pour chaque type de tronçon de mât 1 analysé, en prenant l'hypothèse d'un tronçon de mât 1 constitué de onze éléments de mât 14, les inventeurs ont calculé la valeur de ce facteur d'excentricité au niveau de la connexion entre les segments de paroi du dixième et du onzième élément de mât 14, le premier élément de mât 14 étant localisé au niveau du sol, de part et d'autre de la jonction entre ces éléments de mât 14.

Les résultats de ces calculs sont repris dans le tableau 1 ci-dessous.

**Tableau 1**

| Tronçon de mât | Elément de mât 11 | Elément de mât 10 |
|---|---|---|
| Invention | 1,45 | 1,48 |
| Exemple comparatif 1 | 2,80 | 2,49 |
| Exemple comparatif 2 | 2,97 | 2,86 |
| Exemple comparatif 3 | 3,01 | 3,09 |
| Exemple comparatif 4 | 2,09 | 2,13 |
| Exemple comparatif 5 | 2,82 | 2,75 |

Comme le montre le tableau ci-dessus, la configuration selon l'invention est celle qui permet d'obtenir les facteurs d'excentricité les plus faibles.

Ainsi, la configuration selon l'invention aboutit à une réduction des contraintes liées aux effets des excentricités qui se manifestaient à travers des contributions supplémentaires et localisées provenant du moment de flexion, en particulier dans la région entre les connecteurs de segment 26 et les connecteurs d'élément 37.

Ces simulations montrent donc que la solution proposée par l'invention, et consistant à surajouter des sur-connecteurs à cheval sur les connecteurs de segment 26 et les connecteurs d'élément 37, est celle qui permet, parmi les six configurations simulées, la meilleure répartition des contraintes au sein du mât.

## Revendications

1. Tronçon de mât (1) pour éolienne présentant un axe central longitudinal (L) s'étendant suivant une direction longitudinale, le tronçon de mât (1) comprenant au moins deux éléments de mât (14) tubulaires empilés selon la direction longitudinale et agencés bord à bord au niveau d'un plan de jonction (P), chaque élément de mât (14) comprenant au moins deux segments de paroi (16), connectés entre eux par des connecteurs de segment (26) s'étendant le long des bords longitudinaux des segments de paroi (16), le tronçon de mât (1) comprenant en outre des connecteurs d'élément (37) s'étendant chacun à cheval sur lesdits deux éléments de mât (14), dans le prolongement des connecteurs de segment (26) selon la direction longitudinale,
**caractérisé en ce que** le tronçon de mât (1) comprend en outre une pluralité de sur-connecteurs d'élément (45), chaque sur-connecteur d'élément (45) s'étendant à cheval sur un connecteur de segment (26) et un connecteur d'élément (37) adjacents selon la direction longitudinale.

2. Tronçon de mât (1) selon la revendication 1, dans lequel le sur-connecteur d'élément (45) présente un contour extérieur symétrique par rapport à un plan horizontal passant, selon la direction longitudinale, à mi-chemin entre le connecteur de segment (26) et le connecteur d'élément (37).

3. Tronçon de mât (1) selon l'une quelconque des revendications précédentes, dans lequel les bords longitudinaux du sur-connecteur d'élément (45) coïncident avec les bords longitudinaux du connecteur de segment (26) sous-jacent.

4. Tronçon de mât (1) selon l'une quelconque des revendications précédentes, dans lequel chaque sur-connecteur d'élément (45) est sous la forme d'une plaque plane.

5. Tronçon de mât (1) selon l'une quelconque des revendications précédentes, dans lequel chaque sur-connecteur d'élément (45) présente un contour rectangulaire.

6. Tronçon de mât (1) selon l'une quelconque des revendications précédentes, dans lequel chaque connecteur de segment (26) s'étend sur une hauteur sensiblement égale à la hauteur de l'élément de mât (14) correspondant.

7. Tronçon de mât selon l'une quelconque des revendications 1 à 5, dans lequel, pour au moins un élément de mât (14), l'élément de mât (14) comprend, au niveau de chaque jonction entre segments de paroi (16) adjacents circonférentiellement, au moins deux connecteurs de segment (26) adjacents selon la direction longitudinale et un sur-connecteur de segment (31), lequel s'étend à cheval sur les deux connecteurs de segment (26) adjacents.

8. Tronçon de mât selon la revendication 7, dans lequel le sur-connecteur de segment (31) présente un contour extérieur symétrique par rapport à un plan horizontal passant à mi-chemin, selon la direction longitudinale, entre les deux connecteurs de segment (26) adjacents.

9. Tronçon de mât (1) selon l'une quelconque des revendications 7 et 8, dans lequel les bords longitudinaux du sur-connecteur de segment (31) coïncident avec les bords longitudinaux des connecteurs de segment (26) sous-jacents.

10. Tronçon de mât (1) selon l'une quelconque des revendications 7 à 9, dans lequel chaque sur-connecteur de segment (31) est sous la forme d'une plaque plane.

11. Tronçon de mât (1) selon l'une quelconque des revendications 7 à 10, dans lequel chaque sur-connecteur de segment (31) présente un contour rectangulaire.

12. Tronçon de mât (1) selon l'une quelconque des revendications précédentes, dans lequel chaque segment de paroi (16) comprend au moins un pan central (18) et deux pans latéraux (20) formant un angle avec le ou chaque pan central (18), les pans latéraux (20) comprenant les bords longitudinaux du segment de paroi (16).

13. Tronçon de mât (1) selon la revendication 12, lequel comprend en outre des troisièmes connecteurs (36), disposés à cheval sur deux éléments de mât (14) adjacents, entre deux connecteurs d'élément (37) adjacents circonférentiellement.

14. Tronçon de mat (1) selon la revendication 13, dans lequel chaque troisième connecteur (36) s'étend à cheval sur deux pans centraux (18) adjacents longitudinalement des deux éléments de mât (14) et chaque connecteur d'élément (26) s'étend à cheval sur deux pans latéraux (20) adjacents circonférentiellement de l'un au moins des deux éléments de mât (14) adjacents.

15. Tronçon de mât (1) selon l'une quelconque des revendications 12 à 14, dans lequel les bords longitudinaux d'un segment de paroi (16) de l'élément de mât (14) supérieur se situent dans le prolongement des bords longitudinaux du segment de paroi (16) adjacent selon la direction longitudinale de l'élément de mât (14) inférieur.

16. Tronçon de mât (1) selon la revendication 15, dans laquelle chaque connecteur d'élément (26) s'étend à cheval sur deux pans latéraux (20) adjacents circonférentiellement des deux éléments de mât (14) adjacents.

17. Tronçon de mât (1) selon l'une des revendications 12 à 14, dans lequel les éléments de mât (14) adjacents sont décalés angulairement les uns par rapport aux autres, et chaque connecteur d'élément (37) s'étend d'une part à cheval sur deux pans latéraux (20) adjacents circonférentiellement de l'un des éléments de mât (14) et d'autre part sur un pan central (18) de l'autre élément de mât (14).

18. Tronçon de mât (1) selon l'une quelconque des revendications précédentes, lequel présente une forme tubulaire de section transversale polygonale, chaque côté de ce polygone définissant une facette du tronçon de mât (1).

19. Mât d'éolienne (2) comprenant au moins un tronçon de mât (1) selon l'une quelconque des revendications précédentes.

20. Procédé d'assemblage d'un tronçon de mât (1) selon l'une quelconque des revendications 1 à 18, comprenant :
- la fourniture de segments de paroi (16) et l'assemblage de ces segments de paroi (16) entre eux par l'intermédiaire de connecteurs de segment (26) de sorte à former des éléments de mât (14) ;
- l'empilement, selon la direction longitudinale, de deux éléments de mât (14) et la connexion entre eux de ces deux éléments de mât (14) au moyen de connecteurs d'élément (37) ; et
- la fixation de sur-connecteurs d'élément (45) à cheval sur un connecteur de segment (26) et un connecteur d'élément (37) adjacents selon la direction longitudinale.

21. Procédé d'assemblage selon la revendication 20, dans lequel l'étape d'assemblage des segments de paroi (16) comprend, pour au moins un élément de mât (14), la connexion entre eux des segments de paroi (16) adjacents circonférentiellement par l'intermédiaire d'au moins deux connecteurs de segment (26) adjacents selon la direction longitudinale, et dans lequel le procédé d'assemblage comprend en outre la fixation de sur-connecteurs de segment (31), chaque sur-connecteur de segment (31) s'étendant à cheval sur les deux connecteurs de segment (26) adjacents selon la direction longitudinale.

## Patentansprüche

1. Mastabschnitt (1) für Windkraftanlage, mit einer zentralen Längsachse (L), die sich entlang einer Längsrichtung erstreckt, wobei der Mastabschnitt (1) wenigstens zwei rohrförmige Mastelemente (14) aufweist, die entlang der Längsrichtung übereinandergestapelt sind und auf Höhe einer Verbindungsebene (P) auf Stoß angeordnet sind, wobei jedes Mastelement (14) wenigstens zwei Wandsegmente (16) aufweist, die miteinander verbunden sind mittels Segmentverbindern (26), die sich entlang von Längsrändern der Wandsegmente (16) erstrecken, wobei der Mastabschnitt (1) ferner Elementverbinder (37) aufweist, die sich jeweils rittlings auf den beiden Mastelementen (14) erstrecken in der Verlängerung der Segmentverbinder (26) entlang der Längsrichtung,
**dadurch gekennzeichnet, dass** der Mastabschnitt (1) ferner eine Mehrzahl von Elementüberverbindern (45) aufweist, wobei sich jeder Elementüberverbinder (45) rittlings erstreckt auf einem Segmentverbinder (26) und einem Elementverbinder (37), die entlang der Längsrichtung benachbart sind.

2. Mastabschnitt (1) gemäß Anspruch 1, wobei der Elementüberverbinder (45) eine Außenkontur hat, die symmetrisch ist bezüglich einer Horizontalebene, die entlang der Längsrichtung mittig zwischen dem Segmentverbinder (26) und dem Elementverbinder (37) passiert.

3. Mastabschnitt (1) gemäß irgendeinem der vorhergehenden Ansprüche, wobei die Längsränder des Elementüberverbinders (45) zusammenfallen mit den Längsrändern des darunterliegenden Segmentverbinders (26)

4. Mastabschnitt (1) gemäß irgendeinem der vorhergehenden Ansprüche, wobei jeder Elementüberverbinder (45) die Form einer planen Platte hat.

5. Mastabschnitt (1) gemäß irgendeinem der vorhergehenden Ansprüche, wobei jeder Elementüberverbinder (45) eine Rechteckkontur hat.

6. Mastabschnitt (1) gemäß irgendeinem der vorhergehenden Ansprüche, wobei jeder Elementverbinder (26) sich über eine Höhe im Wesentlichen gleich der Höhe des korrespondierenden Mastelements (14) erstreckt.

7. Mastabschnitt gemäß irgendeinem der Ansprüche 1 bis 5, wobei, für wenigstens ein Mastelement (14), das Mastelement (14) aufweist, auf Höhe jeder Verbindungsstelle zwischen umfänglich benachbarten Wandsegmenten (16), wenigstens zwei Segmentverbinder (26), die entlang der Längsrichtung benachbart sind, und einen Segmentüberverbinder (31), welcher sich rittlings auf den beiden benachbarten Segmentverbindern (26) erstreckt.

8. Mastabschnitt gemäß Anspruch 7, wobei der Segmentüberverbinder (31) eine Außenkontur hat, die symmetrisch ist bezüglich einer Horizontalebene, die, entlang der Längsrichtung, mittig zwischen den beiden benachbarten Elementverbindern (26) passiert.

9. Mastabschnitt (1) gemäß irgendeinem der Ansprüche 7 und 8, wobei die Längsränder des Segmentüberverbinders (31) mit den Längsrändern der darunterliegenden Segmentverbinder (26) zusammenfallen.

10. Mastabschnitt (1) gemäß irgendeinem der Ansprüche 7 bis 9, wobei der Segmentüberverbinder (31) die Form einer planen Platte hat.

11. Mastabschnitt (1) gemäß irgendeinem der Ansprüche 7 bis 10, wobei jeder Segmentüberverbinder (31) eine Rechteckkontur hat.

12. Mastabschnitt (1) gemäß irgendeinem der vorhergehenden Ansprüche, wobei jedes Wandsegment (16) wenigstens ein zentrales Stück (18) und zwei seitliche Stücke (20) aufweist, die mit dem oder jedem zentralen Stück (18) einen Winkel bilden, wobei die seitlichen Stücke (20) die Längsränder des Wandsegments (16) aufweisen.

13. Mastabschnitt (1) gemäß Anspruch 12, welcher ferner dritte Verbinder (36), die rittlings auf zwei benachbarten Mastelementen (14) angeordnet sind, zwischen zwei umfänglich benachbarten Elementverbindern (37) aufweist.

14. Mastabschnitt (1) gemäß Anspruch 13, wobei jeder dritte Verbinder (36) sich rittlings auf zwei längs benachbarten zentralen Stücken (18) der beiden Mastelemente (14) erstreckt und jeder Elementverbinder (26) sich rittlings auf zwei umfänglich benachbarten seitlichen Stücken (20) von wenigstens einem der beiden benachbarten Mastelemente (14) erstreckt.

15. Mastabschnitt (1) gemäß irgendeinem der Ansprüche 12 bis 14, wobei die Längsränder eines Wandsegments (16) des oberen Mastelements (14) sich in der Verlängerung der Längsränder des entlang der Längsrichtung benachbarten Wandsegments (16) des unteren Mastelements (14) befinden.

16. Mastabschnitt (1) gemäß Anspruch 15, wobei jeder Elementverbinder (26) sich rittlings auf zwei umfänglich benachbarten seitlichen Stücken (20) der beiden benachbarten Mastelemente (14) erstreckt.

17. Mastabschnitt (1) gemäß einem der Ansprüche 12 bis 14, wobei die benachbarten Mastelemente (14) zueinander im Winkelabstand sind und jeder Elementverbinder (37) sich einerseits rittlings auf zwei umfänglich benachbarten seitlichen Stücken (20) des einen Mastelements (14) und andererseits auf einem zentralen Stück (18) des anderen Mastelements (14) erstreckt.

18. Mastabschnitt (1) gemäß irgendeinem der vorhergehenden Ansprüche, wobei er eine rohrförmige Gestalt mit polygonalem Querschnitt hat, wobei jede Seite dieses Polygons eine Facette des Mastabschnitts (1) definiert.

19. Windkraftanlagemast (2) mit wenigstens einem Mastabschnitt (1) gemäß irgendeinem der vorhergehenden Ansprüche.

20. Verfahren zum Zusammenbau eines Mastabschnitts (1) gemäß irgendeinem der Ansprüche 1 bis 18, aufweisend:
- Bereitstellen von Wandsegmenten (16) und Zusammenbauen dieser Wandsegmente (16) untereinander mittels Segmentverbindern (26), um die Mastelemente (14) zu bilden,
- Aufeinanderstapeln, entlang der Längsrichtung, von zwei Mastelementen (14) und Miteinanderverbinden dieser beiden Mastelemente (14) mittels Elementverbindern (37), und
- Befestigen von Elementüberverbindern (45) rittlings auf einem Segmentverbinder (26) und einem Elementverbinder (37), die in der Längsrichtung benachbart sind.

21. Verfahren zum Zusammenbau gemäß Anspruch 20, wobei der Schritt des Zusammenbaus der Wandsegmente (16) aufweist, für wenigstens ein Mastelement (14), Miteinanderverbinden der umfänglich benachbarten Wandsegmente (16) mittels wenigstens zweier Segmentverbinder (26), die entlang der Längsrichtung benachbart sind, und wobei das Verfahren zum Zusammenbau ferner aufweist Befestigen der Segmentüberverbinder (31), wobei sich jeder Segmentüberverbinder (31) rittlings auf den beiden Segmentverbindern (26) erstreckt, die entlang der Längsrichtung benachbart sind.

## Claims

1. A mast section (1) for a wind turbine having a longitudinal central axis (L) extending along a longitudinal direction, the mast section (1) comprising at least two tubular mast elements (14) stacked along the longitudinal direction and arranged edge-to-edge at a joining plane (P), each mast element (14) comprising at least two wall segments (16), connected to one another by segment connectors (26) extending along the longitudinal edges of the wall segments (16), the mast section (1) further comprising element connectors (37) each extending astride said two mast elements (14), in the extension of the segment connectors (26) in the longitudinal direction,
the mast section (1) further comprising a plurality of element overconnectors (45), each element overconnector (45) extending astride a segment connector (26) and an adjacent element connector (37) in the longitudinal direction.

2. The mast section (1) according to claim 1, wherein each element overconnector (45) has a symmetrical outer contour relative to a horizontal plane passing, in the longitudinal direction, midway between the segment connector (26) and the element connector (37).

3. The mast section (1) according to any one of the preceding claims, wherein the longitudinal edges of the element overconnector (45) coincide with the longitudinal edges of the underlying segment connector (26).

4. The mast section (1) according to any one of the preceding claims, wherein each element overconnector (45) is in the form of a flat plate.

5. The mast section (1) according to any one of the preceding claims, wherein each element overconnector (45) has a rectangular contour.

6. The mast section (1) according to any one of the preceding claims, wherein each segment connector (26) extends over a height substantially equal to the height of the corresponding mast element (14).

7. The mast section according to any one of claims 1 to 5, wherein, for at least one mast element (14), the mast element (14) comprises, at each junction between circumferentially adjacent wall segments (16), at least two segment connectors (26) that are adjacent along the longitudinal direction and one segment overconnector (31), which extends astride the two adjacent segment connectors (26).

8. The mast section according to claim 7, wherein each segment overconnector (31) has a symmetrical outer contour relative to a horizontal plane passing midway, in the longitudinal direction, between the two adjacent segment connectors (26).

9. The mast section (1) according to any one of the preceding claims, wherein the longitudinal edges of each segment overconnector (31) coincide with the longitudinal edges of the underlying segment connectors (26).

10. The mast section (1) according to any one of the preceding claims, wherein each segment overconnector (31) is in the form of a flat plate.

11. The mast section (1) according to any one of the preceding claims, wherein each segment overconnector (31) has a rectangular contour.

12. The mast section (1) according to any one of the preceding claims, wherein each wall segment (16) comprises at least one central panel (18) and two side panels (20) forming an angle with the or each central panel (18), the side panels (20) comprising the longitudinal edges of the wall segment (16).

13. The mast section (1) according to claim 12, which further comprises third connectors (36), arranged astride two adjacent mast elements (14), between two circumferentially adjacent element connectors (37).

14. The mast section (1) according to claim 13, wherein each third connector (36) extends astride two longitudinally adjacent central panels (18) of the two mast elements (14) and each element connector (26) extends astride two circumferentially adjacent side panels (20) of at least one of the two adjacent mast elements (14).

15. The mast section (1) according to any one of claims 12 to 14, wherein the longitudinal edges of a wall segment (16) of the upper mast element (14) are situated in the extension of the longitudinal edges of the adjacent wall segment (16) in the longitudinal direction of the lower mast element (14).

16. The mast section (1) according to claim 15, wherein each element connector (26) extends astride two circumferentially adjacent side panels (20) of the two adjacent mast elements (14).

17. The mast section (1) according to any one of claims 12 to 16, wherein the adjacent mast elements (14) are angularly offset from one another, and each element connector (37) extends on the one hand astride two circumferentially adjacent side panels (20) of one of the mast elements (14) and on the other hand on the central panel (18) of the other mast element (14).

18. The mast section (1) according to any one of the preceding claims, having a tubular shape with a polygonal cross-section, each side of this polygon defining a facet of the mast section (1).

19. A wind turbine mast (2) comprising at least one mast section (1) according to any one of the preceding claims.

20. A method for assembling a mast section (1) according to any one of claims 1 to 18, comprising:
- providing wall segments (16) and assembling these wall segments (16) to one another via segment connectors (26) so as to form mast elements (14);
- stacking, along the longitudinal direction, two mast elements (14) and connecting these two mast elements (14) to one another using element connectors (37); and
- fastening element connectors (45) astride a segment connector (26) and an element connector (37) that are adjacent in the longitudinal direction.

21. The assembly method according to claim 20, wherein the step for assembling wall segments (16) comprises, for at least one mast element (14), connecting circumferentially adjacent wall segments (16) to one another by means of at least two segment connectors (26) that are adjacent in the longitudinal direction, and wherein the assembly method further comprises fastening segment overconnectors (31), each segment overconnector (31) extending astride the two segment connectors (26) that are adjacent in the longitudinal direction.
